# EUROPÄISCHE PATENTSCHRIFT

(11) **EP 3 004 626 B1**
(45) Veröffentlichungstag und Bekanntmachung des Hinweises auf die Patenterteilung: **09.10.2024**
(21) Anmeldenummer: 14736643.9
(22) Anmeldetag: 28.05.2014
(51) Int. Cl.: F02N 11/08, F02N 11/10

(54) **VERFAHREN ZUM BETRIEB EINES FAHRZEUGS MIT VERBRENNUNGSMOTOR MIT EINER START-STOPP-FUNKTION**
METHOD FOR OPERATING A VEHICLE WITH COMBUSTION ENGINE WITH A START-STOP FUNCTION
PROCÉDÉ DE FONCTIONNEMENT D'UN VEHICULE AVEC MOTEUR THERMIQUE AVEC UNE FONCTION MARCHE-ARRÊT

(30) Priorität: 31.05.2013 DE 102013009220
(43) Veröffentlichungstag der Anmeldung: 13.04.2016
(73) Patentinhaber: Volkswagen Aktiengesellschaft, 38440 Wolfsburg (DE)
(72) Erfinder: BAUMGARTH, Marco, 38533 Vordorf-Eickhorst (DE)
(86) Internationale Anmeldenummer: PCT/EP2014/061077
(87) Internationale Veröffentlichungsnummer: WO 2014/191464

(56) Entgegenhaltungen:
- EP-A1- 2 532 868
- WO-A1-98/14702
- DE-A1- 10 030 290
- DE-A1- 102006 053 515
- DE-A1- 102007 009 871
- DE-A1- 19 911 736
- US-A- 5 826 671
- US-A1- 2013 054 060

## Beschreibung

### Stand der Technik

Die vorliegende Erfindung betrifft ein Verfahren zum Betrieb eines Fahrzeugs mit Verbrennungsmotor mit einer Start-Stopp-Funktion sowie ein Fahrzeug mit einer Steuerungseinrichtung zur Durchführung eines derartigen Verfahrens.

Es ist bekannt, dass bei Fahrzeugen mit Verbrennungskraftmaschinen (Verbrennungsmotoren) heutzutage Verfahren und Vorrichtungen eingesetzt werden, um den Kraftstoffverbrauch und die Schadstoffemissionen dadurch zu reduzieren, dass die Verbrennungskraftmaschine unter bestimmten Voraussetzungen bzw. beim Vorliegen vorgegebener Abschaltbedingungen automatisch abgeschaltet und beim Vorliegen vorgegebener Anschaltbedingungen automatisch wieder eingeschaltet wird. Diese Verfahren und Vorrichtungen sind unter dem Begriff "Start-Stopp" bekannt und vor allem für den Stadtverkehr geeignet, da Fahrzeuge im Stadtverkehr oft an Ampeln oder aufgrund des Verkehrsaufkommens zum Stehen kommen und der Betrieb der Verbrennungskraftmaschine dann nicht erforderlich ist.

Zu den Abschaltbedingungen kann z.B. gehören, dass ein Grenzwert der Fahrzeuggeschwindigkeit unterschritten wird oder das Fahrzeug vollkommen zum Stillstand kommt und gleichzeitig kein Gang eingelegt ist bzw. die Gangschaltstellung in Neutralstellung steht. Hierdurch soll sichergestellt werden, dass ein Abschalten der Verbrennungskraftmaschine nicht während der Fahrt und damit ungewollt vom Fahrer und sicherheitsgefährdend erfolgt. Durch die Abschalt- und Anschaltbedingungen kann jedoch auch berücksichtigt werden, dass ein Abschalten bzw. Verbleib im abgeschalteten Zustand dazu führen kann, dass ein erneuter Start nicht vorgenommen werden kann, z.B. weil während des abgeschalteten Zustands der Verbrennungskraftmaschine der Generator des Fahrzeugs nicht betrieben wurde. Dies kann zu einer derartigen Entladung des elektrischen Energiespeichers des Fahrzeugs wie z.B. der Fahrzeugbatterie durch die während der Motorunterbrechung weiter betriebenen Energieverbraucher des Fahrzeugs führen, dass ein erneutes Starten der Verbrennungskraftmaschine aufgrund der zu geringen Ladung der Batterie nicht mehr möglich ist. Auch können andere Umstände dafür sprechen, das automatische Abschalten des Verbrennungsmotors zu unterdrücken bzw. das erneute Starten des Verbrennungsmotors zu unterdrücken oder zu erzwingen.

Aus der WO 98/14702 ist bekannt, dass die automatische Abschaltung des Verbrennungsmotors durch eine Start-Stopp-Funktion gesperrt wird, wenn die Batterie des Fahrzeugs zu diesem Zeitpunkt unterhalb einer vorgegebenen Sperrschwelle entladen ist. Um dies zu erkennen, erfolgt während des Betriebes der Start-Stopp-Funktion eine Überwachung der Spannung der Fahrzeugbatterie mittels einer elektronischen Schaltung.

Hierauf aufbauend beschreibt die DE 100 30 290 A1, dass der Verbrennungsmotor automatisch auch dann wieder angelassen wird, wenn die Fahrzeugbatterie während des automatischen Abschaltens durch die Start-Stopp-Funktion unterhalb einer Sperrschwelle entladen ist, d.h. eine Messung der Batteriespannung eine Spannung unterhalb eines Schwellenwertes ergibt. Hierdurch erfolgt eine Aufladung der Fahrzeugbatterie nicht nur während der Fahrt, sondern auch z.B. beim Warten vor einer Ampel, falls die niedrige Batteriespannung dies erfordert.

Die DE 199 11 736 A1 ergänzt das automatische Wiederanlassen des Verbrennungsmotors der DE 100 30 290 A1 um eine Überprüfung, ob sich das Getriebe auch gleichzeitig in Neutralstellung befindet, um ein automatisches Anrollen des Fahrzeugs in derartigen Situationen zu vermeiden.

Da die DE 199 11 736 A1 jedoch keine Lösung für den Fall offenbart, dass das automatische Wiederanlassen der DE 100 30 290 A1 aufgrund des Getriebes in Fahrstellung unterdrückt wird, beschreibt die DE 10 2006 053 515 A1, dass in diesem Fall, falls eine Ausschlussbedingung für ein automatisches Wiederanlassen greift, ein Warnsignal an den Fahrer erzeugt wird, um ihn hierauf hinzuweisen und zum Aufheben der Ausschlussbedingung, z.B. Getriebe in Fahrstellung, zu veranlassen.

Die DE 10 2007 009 871 A1 beschreibt, dass nach einem Anschleppvorgang zum Starten eines Fahrzeugs, der z.B. aufgrund eines defekten Anlassers oder einer anderen Komponente des Startsystems oder aufgrund des Zustands der (Starter-)Batterie (defekt oder leer) erfolgt, ein Abschalten durch eine Start-Stopp-Funktion bei Vorliegen der bekannten Abschaltbedingungen verhindert wird, da dies vermutlich ebenfalls wieder ein Anschleppen erfordern würde.

DE 100 30 290 A1 offenbart ein Start-Stopp-System für ein Fortbewegungsmittel, bei welchem in Abhängigkeit eines Ladezustandes einer Batterie, welcher in Abhängigkeit ihrer Spannung sowie eines Spannungsabfalls bei der Aktivierung des Anlassers ermittelt werden kann, eine automatische Abschaltung eines Verbrennungsmotors verhindert wird.

US 2013/0054060 A1 offenbart ein Start-Stopp-System, bei welchem eine Vielzahl Bedingungen untersucht werden, um zu bestimmen, ob die vom Verbrennungsmotor bereitgestellte Energie zur Stromerzeugung erforderlich ist, sodass ein automatisches Abschalten der Verbrennungsmaschine unterdrückt bzw. ein automatischer Wiederstart der Verbrennungsmaschine veranlasst wird.

EP 2 532 868 A1 offenbart ein Start-Stopp-Verfahren für ein Fortbewegungsmittel mit einer Verbrennungskraftmaschine, bei welcher eine aktuelle Kühlmitteltemperatur verwendet wird, um zu erkennen, ob sich die Maschine in einem hinreichend warmen Zustand für einen automatischen Motorstopp befindet.

US 5,826,671 offenbart ein Start-Stopp-Verfahren für eine Verbrennungskraftmaschine eines Fortbewegungsmittels, bei welchem in Abhängigkeit einer Kühlmitteltemperatur ermittelt wird, wieviel Flüssigbrennstoff an der Wandung einer Brennkammer kondensiert ist. Bei nicht hinreichend warmer Maschine wird ein automatischer Motorstopp unterdrückt.

Eine Überwachung des Ladezustands einer Fahrzeugbatterie erfolgt heutzutage üblicherweise über einen Batteriesensor, der die Batterietemperatur, die Batteriespannung und den Ladestrom erfasst. Dieser komplexe Sensor, der auch als BDM (Battery Data Module) bezeichnet wird, sitzt z.B. an der Minus-Anschlussklemme des Massekabels der Fahrzeugbatterie und ist über einen Datenbus wie den LIN-Datenbus (Local Interconnect Network) oder den CAN-Datenbus (Controlled Area Network) mit weiteren Steuergeräten des Fahrzeugs verbunden. Dies kann z.B. das Steuergerät für die Batterieüberwachung (Battery Energy Management - BEM) sein. Im Batteriesensor wird die Batterietemperatur anhand eines Kennfeldes und der Umgebungstemperatur der Batterie wie z.B. des Motorraums ermittelt. Aus der Integration des Ladestroms über die Zeit kann durch den Batteriesensor der Ladezustand (State of Charge - SOC) der Fahrzeugbatterie bestimmt werden. Auch kann über die Batteriespannung und die bekannte Entladungskurve der Fahrzeugbatterie unter Berücksichtigung der Batterietemperatur deren Ladezustand bestimmt werden. Durch die Verwendung beider Methoden können diese gegenseitig plausibilisiert werden.

Allen zuvor beschrieben Verfahren und Vorrichtungen ist dabei gemeinsam, dass für die Ermittlung des Ladezustands des elektrischen Energiespeichers des Fahrzeugs eine zusätzliche Elektronik in Form eines Sensors (Batteriesensors) erforderlich ist. Dies führt zu Kosten für den zusätzlichen Sensor selbst sowie seine Verkabelung etc.

Es ist daher eine Aufgabe der vorliegenden Erfindung, die Sicherstellung einer Wiederstartfähigkeit bei Fahrzeugen mit Start-Stopp-Funktion zu verbessern und bzw. oder zu vereinfachen. Insbesondere soll diese Verbesserung möglichst einfach und kostengünstig erreicht werden, z.B. ohne dass hierzu zusätzliche elektronische Bauteile wie insbesondere ein komplexer und teurer Batteriesensor (BDM) verwendet werden müssen.

### Offenbarung der Erfindung

Die vorstehend genannte Aufgabe wird erfindungsgemäß durch ein Verfahren mit den Merkmalen gemäß Anspruch 1 sowie ein Fahrzeug mit den Merkmalen nach Anspruch 14 gelöst. Die Unteransprüche und Figuren zeigen bevorzugte Weiterbildungen der Erfindung.

Entsprechende wird ein Verfahren zum Betrieb eines Fahrzeugs mit Verbrennungsmotor mit einer Start-Stopp-Funktion, durch die das Fahrzeug zwischen einem Normalbetriebszustand mit laufendem Verbrennungsmotor und einem Bereitschaftszustand mit ausgeschaltetem Verbrennungsmotor automatisch umschaltbar ist, mit den Schritten vorgeschlagen:
- Überprüfen des Vorliegens wenigstens eines Abschaltverbots, und
- im Falle des Vorliegens wenigstens eines Abschaltverbots, Unterdrücken des Umschaltens in den Bereitschaftszustand,
   wobei wenigstens ein Abschaltverbot wenigstens einen der folgenden Parameter berücksichtigt:
- den aktuellen Nutzungsstatus eines elektrischen Energiespeichers des Fahrzeugs und bzw. oder
- den Verlauf des Nutzungsstatus eines elektrischen Energiespeichers des Fahrzeugs über eine vorbestimmte Zeitdauer, vorzugsweise über die letzte Fahrt des Fahrzeugs.

Der vorliegenden Erfindung liegt die Erkenntnis zugrunde, dass die Sicherstellung einer Wiederstartfähigkeit bei Fahrzeugen mit Start-Stopp-Funktion dadurch verbessert werden kann, dass Situationen, die das Wiederstarten des Verbrennungsmotors durch eine Start-Stopp-Funktion gefährden könnten, auch ohne teure und aufwendige Elektronik und Sensorik mit einer ausreichend hohen Wahrscheinlichkeit erkannt werden können. So ist es nicht zwingend erforderlich, den Ladezustand des elektrischen Energiespeichers wie z.B. der Fahrzeugbatterie tatsächlich bzw. möglichst exakt zu bestimmen, um Umschaltbedingungen zwischen dem Normalbetriebszustand und dem Bereitschaftszustand sowie Umschaltverbote und Wiederstartgebote anwenden zu können. Vielmehr können auf Basis bereits vorhandener Informationen, d.h. ohnehin im Fahrzeug primär zu anderen Zwecken erfasster Informationen wie des aktuellen Nutzungsstatus des elektrischen Energiespeichers bzw. dessen Historie, Abschätzungen getroffen werden, aus denen sich der Ladezustand des elektrischen Energiespeichers bzw. dessen Änderung indirekt mit einem geringeren Aufwand, insbesondere geringeren Kosten, unter Inkaufnahme einer verringerten Genauigkeit ermitteln lassen. Auch können zusätzlich weitere Parameter wie z.B. die Kühlmitteltemperatur, die Außentemperatur, die Motorraumtemperatur, die Betriebszustände elektrischer Verbraucher, die Leistungsaufnahme elektrischer Verbraucher etc. verwendet werden, um derartige Abschätzungen zu treffen bzw. Modellierungen vorzunehmen, aus denen sich derartige Informationen ermitteln lassen. Ferner können diese Abschätzungen und bzw. oder Modellierungen parallel zur Auswertung von Sensoren vorgenommen werden, um deren Messangaben zu überprüfen und die Sensoren ggfs. bei Ausfall zumindest vorläufig zu ersetzen. Hierdurch kann es zwar aufgrund der geringeren Genauigkeiten dazu kommen, dass z.B. Abschaltverbote ausgesprochen werden, die bei einer exakteren Ermittlung des Ladezustands nicht erforderlich wären, jedoch kann dies durch die geringeren Kosten in Kauf genommen werden. Mit anderen Worten kann eine Verfügbarkeitseinschränkung der Start-Stopp-Funktion zugunsten einer Verringerung der Kosten des Fahrzeugs in Kauf genommen werden.

Erfindungsgemäß kann über die Ermittlung des Nutzungsstatus der Fahrzeugbatterie auf ein vorliegendes Energiedefizit der Fahrzeugbatterie gegenüber ihrer maximalen Kapazität geschlossen werden. Hierbei kann sowohl der aktuelle Nutzungsstatus der Fahrzeugbatterie als auch dessen Historie über einen vorgegebenen Zeitabschnitt, vorzugsweise seit dem Beginn der letzten Fahrt, betrachtet werden, oder beide Informationen gemeinsam.

Eine derartige Historie kann z.B. in Form eines Protokolls der aktivierten und deaktivierten elektrischen Verbraucher und bzw. oder des Betriebes einer elektrischen Energiequelle wie z.B. des Generators des Fahrzeugs z.B. durch das Motorsteuergerät über die Dauer der letzten Nutzung des Fahrzeugs und damit auch über die Nutzung der Fahrzeugbatterie erstellt werden. Aus diesem zeitlichen Verlauf des Nutzungsstatus kann entsprechend der Auswertung der Kühlmitteltemperatur auf die Dauer und Leistungsumsetzung der letzten Fahrt hinsichtlich des elektrischen Verbrauchs und bzw. oder der elektrischen Energieerzeugung geschlossen werden.

Wird der aktuelle Nutzungsstatus betrachtet, so kann die Zeit seit dem Abstellen des Fahrzeugs erfasst und nach einer vorbestimmten Zeitdauer die an den Klemmen der Fahrzeugbatterie und bzw. oder im Bordnetz des Fahrzeugs anliegenden Spannung als Ruhespannung angesehen werden. Liegt dieser Status der Klemmenspannung vor, so kann hieraus geschlossen werden, dass das Fahrzeug bzw. dessen Verbrennungsmotor schon eine derart lange Zeit nicht mehr betrieben wurde, dass von einer nicht-vollständig aufgeladenen Fahrzeugbatterie ausgegangen werden muss.

Ferner wird die Kühlmitteltemperatur des Verbrennungsmotors berücksichtigt, wobei die Berücksichtigung der Kühlmitteltemperatur des Verbrennungsmotors erfolgt mittels der Schritte:
- Ermitteln der Kühlmitteltemperatur des Fahrzeugs, vorzugsweise im abgestellten Zustand des Fahrzeugs, und
- Berechnen einer Mindestbetriebsdauer des Verbrennungsmotors in Abhängigkeit der ermittelten Kühlmitteltemperatur, bis zu deren Verstreichen kein Umschalten in den Bereitschaftszustand ausgeführt werden darf.

Somit kann basierend auf der Kühlmitteltemperatur des Verbrennungsmotors auf die Dauer bzw. umgesetzte Leistung der letzten Fahrt oder Fahrten des Fahrzeugs und damit auf den Grad der vergangenen Aufladung der Fahrzeugbatterie geschlossen werden. Wird nämlich eine geringe aktuelle Kühlmitteltemperatur ermittelt, kann darauf geschlossen werden, dass die letzte Fahrt des Fahrzeugs und damit die Aufladung der Fahrzeugbatterie schon einige Zeit zurückliegt und zwischenzeitlich eine Entladung erfolgt sein könnte, so dass von einer aktuell nicht vollständig geladenen Fahrzeugbatterie ausgegangen werden muss. Wird jedoch eine hohe bis maximale aktuelle Kühlmitteltemperatur ermittelt, kann von einer ausreichend hohen bzw. sogar vollen Ladung der Fahrzeugbatterie aufgrund einer gerade erst abgeschlossenen Fahrt mit Aufladung der Fahrzeugbatterie ausgegangen werden. Dies gilt ebenso für die umgesetzte Leistung der letzten Fahrt oder Fahrten, da bei höheren Drehzahlen nicht nur der Generator des Fahrzeugs die Fahrzeugbatterie schneller auflädt, sondern auch die Kühlmitteltemperatur schneller ansteigt. Hierbei kann sowohl lediglich die aktuelle Kühlmitteltemperatur als auch die Historie der Kühlmitteltemperatur über einen vorgegebenen Zeitabschnitt betrachtet werden, bei der dann neben den Werten an sich auch deren Änderung über der Zeit ausgewertet werden kann.

Basierend auf der Kühlmitteltemperatur des Verbrennungsmotors kann insbesondere im abgestellten Zustand des Fahrzeugs auf die zurückliegende Aufladung der Fahrzeugbatterie geschlossen werden. Wird somit eine hohe Temperatur des Kühlmittels ermittelt, kann hieraus gefolgert werden, dass die Fahrzeugbatterie derart aufgeladen wurde, dass von einem ausreichenden Ladezustand ausgegangen und eine Freigabe der Start-Stopp-Funktion im laufenden Betrieb bzw. ab dem nächsten Fahrtantritt zugelassen werden kann. Wird hingegen eine eher geringe Temperatur des Kühlmittels ermittelt, so kann hieraus auf eine nur geringe Aufladung der Fahrzeugbatterie geschlossen werden, so dass die Start-Stopp-Funktion erst einmal für einen vorbestimmte Zeit nicht aktiviert werden darf, um eine ausreichende Aufladung der Fahrzeugbatterie sicherzustellen. Dieser Zeitraum des Aussetzens der Start-Stopp-Funktion kann als Funktion der Kühlmitteltemperatur ermittelt werden. Die Mindestbetriebsdauer stellt bis zu ihrem Verstreichen ein Abschaltverbot dar. Vorzugsweise wird so im abgestellten Zustand des Fahrzeugs, d.h. im durch den Fahrer deaktivierten Betrieb, vorherbestimmt, wie lange die Start-Stopp-Funktion bei einem erneuten Betrieb des Fahrzeugs nicht eingesetzt werden darf, um ein Wiederanlassen des Verbrennungsmotors im Bereitschaftszustand sicherzustellen.

Vorzugsweise erfolgt die Berücksichtigung des Nutzungsstatus des elektrischen Energiespeichers mittels der Schritte:
- Ermitteln des Nutzungsstatus des elektrischen Energiespeichers, vorzugsweise im abgestellten Zustand des Fahrzeugs, und
- Berechnen einer Mindestbetriebsdauer des Verbrennungsmotors in Abhängigkeit des ermittelten Nutzungsstatus, bis zu deren Verstreichen kein Umschalten in den Bereitschaftszustand ausgeführt werden darf.

Aus der Information über den Nutzungsstatus des elektrischen Energiespeichers z.B. beim Abstellen des Fahrzeugs bzw. in dessen abgestellten Zustand kann ebenfalls auf dessen Ladezustand bei einem erneuten Erststart des Fahrzeugs geschlossen werden. Liegt der Status der Ruhespannung vor, so kann das Umschalten in den Bereitschaftszustand für eine vorbestimmte Zeitdauer unterlassen werden; liegt dieser Status nicht vor, kann die Start-Stopp-Funktion angewendet werden, z.B. direkt beim erneuten Betriebsbeginn des Fahrzeugs. Zeigt die Historie z.B. eine Differenz zwischen erzeugter und verbrauchter elektrischer Energie auf der zurückliegenden Fahrt, so sollte für einen vorbestimmten Zeitraum nach Neustart des Fahrzeugs kein Umschalten in den Bereitschaftszustand erfolgen, damit das Energiedefizit der vorherigen Fahrt erst einmal wieder ausgeglichen werden kann. Die Mindestbetriebsdauer des Verbrennungsmotors, bis zu deren Verstreichen kein Umschalten in den Bereitschaftszustand ausgeführt werden darf, kann in Abhängigkeit des ermittelten Nutzungsstatus erfolgen, d.h. je größer die letzte Entladung der Batterie, desto länger die Mindestbetriebsdauer.

Vorzugsweise wird ferner folgender Parameter berücksichtigt:
- eine Spannung im Bordnetz des Fahrzeugs und bzw. oder eines elektrischen Energiespeichers, insbesondere in einem vorbestimmten Zustand des Fahrzeugs, vorzugsweise als Ruhespannung im Bordnetz und bzw. oder als Ruhespannung des elektrischen Energiespeichers im abgestellten Zustand des Fahrzeugs.

Zu diesem Zwecke wird die Spannung im Bordnetz des Fahrzeugs und bzw. oder der Fahrzeugbatterie ermittelt. Dies kann auf einfache Art und Weise über einen Spannungsabgriff an den Klemmen der Fahrzeugbatterie erfolgen und erfordert keine komplexe Sensorik. Ferner stellt die Erfassung der Spannung einen direkten Ansatz dar, aus dem sich verlässlich der Ladezustand der Fahrzeugbatterie ermitteln bzw. abschätzen lässt. Wird diese in einem bestimmten Zustand des Fahrzeugs wie z.B. im abgestellten Zustand des Fahrzeugs mit ausgeschalteter Zündung erfasst, so kann diese als Ruhespannung bezeichnet werden. Liegt die Spannung unter einem vorbestimmten Grenzwert, so wird hieraus auf einen zu geringen Ladezustand der Fahrzeugbatterie geschlossen und ein Abschaltverbot des Verbrennungsmotors ausgesprochen, um die Fahrzeugbatterie im Falle eines Umschaltens in den Bereitschaftszustand nicht noch weiter zu entladen und hierdurch das Wiederanlassen des Verbrennungsmotors beim Umschalten in den Normalbetriebszustand zu gefährden. Auch kann in Abhängigkeit der ermittelten Spannung eine Mindestbetriebsdauer des Fahrzeugs berechnet werden, während der ein Umschalten in den Bereitschaftszustand unterlassen wird.

Vorzugsweise weist das Verfahren ferner die Schritte auf:
- Ermitteln des Stromflusses im Bordnetz und bzw. oder des Status wenigstens eines elektrischen Verbrauchers, vorzugsweise im abgestellten Zustand des Fahrzeugs, und
- Berechnen einer Mindestbetriebsdauer des Verbrennungsmotors, bis zu deren Verstreichen kein Umschalten in den Bereitschaftszustand ausgeführt werden darf, in Abhängigkeit des ermittelten Stromflusses und bzw. oder Status wenigstens eines elektrischen Verbrauchers.

Vorteilhaft ist es auch, den Stromfluss im Bordnetz, insbesondere im abgestellten Zustand des Fahrzeugs den Ruhestrom im Bordnetz, und bzw. oder den Status wenigstens eines elektrischen Verbrauchers zu betrachten, um auf den Ladezustand der Fahrzeugbatterie zu schließen. Denn da im abgestellten Zustand des Fahrzeugs keine Aufladung der Fahrzeugbatterie über den Generator erfolgen kann, führen alle im Betrieb befindlichen elektrischen Verbraucher zu einer Verringerung der Ladung der Fahrzeugbatterie. Werden diese Ströme erfasst oder aus den aktivierten Verbrauchern und deren elektrischen Verbrauchsdaten ermittelt, kann hieraus die während des abgestellten Zustands des Fahrzeugs der Fahrzeugbatterie entnommene Ladung ermittelt werden. Aus dieser kann dann eine entsprechende Mindestbetriebsdauer berechnet werden, die erforderlich ist, diese entnommene Ladung wieder auszugleichen, so dass für diese Zeit kein Umschalten in den Bereitschaftszustand erlaubt wird, da dies das bereits vorhandene Ladungsdefizit wieder vergrößern würde. Wird diese Ermittlung während des Betriebes des Fahrzeugs durchgeführt, d.h. während auch eine elektrische Energieerzeugung über den Generator erfolgt, so kann auch hierdurch eine Mindestbetriebsdauer ermittelt werden, bis nach deren Verstreichen erst (wieder) ein Umschalten in den Bereitschaftszustand erfolgen darf.

Vorzugsweise weist das Verfahren ferner die Schritte auf:
- Ermitteln der Außentemperatur und bzw. oder der Temperatur des elektrischen Energiespeichers des Fahrzeugs, vorzugsweise im abgestellten Zustand des Fahrzeugs,
- Ermitteln einer Ladewilligkeit des elektrischen Energiespeichers, und
- Berechnen einer Mindestbetriebsdauer des Verbrennungsmotors in Abhängigkeit der ermittelten Ladewilligkeit des elektrischen Energiespeichers, bis zu deren Verstreichen kein Umschalten in den Bereitschaftszustand ausgeführt werden darf.

Aus der Außentemperatur des Fahrzeugs, die üblicherweise bei Fahrzeugen bereits sensorisch erfasst wird, kann die Temperatur im Motorraum des Fahrzeugs geschlossen werden, in dem sich im Allgemeinen auch die Fahrzeugbatterie befindet, so dass hierüber auch deren Temperatur indirekt bestimmt werden kann, z.B. über ein Temperaturmodell der Umgebung der Fahrzeugbatterie. Vorzugsweise wird hierbei auch die Nacherwärmung des Motorraums nach Abstellen des Fahrzeugs berücksichtigt. Da eine Batterie bei niedrigen Temperaturen aufgrund des höheren Innenwiderstands langsamer auflädt als bei höheren Temperaturen, kann hierüber auch die Ladewilligkeit, d.h. die Bereitschaft der Fahrzeugbatterie zur Aufladung, in Form der Energieaufnahme der Fahrzeugbatterie pro Zeiteinheit geschlossen werden. Liegt also ein geringer Außentemperaturwert insbesondere bei Betriebsbeginn des Fahrzeugs vor, so wird bei Start des Fahrzeugs, d.h. bevor sich der Motorraum und damit auch die Fahrzeugbatterie durch die Abwärme des Verbrennungsmotors erwärmt haben, die Fahrzeugbatterie vergleichsweise langsam aufgeladen, so dass ein eventuell vorhandener geringer Ladezustand der Fahrzeugbatterie durch den Generator auch nur vergleichsweise langsam ausgeglichen werden kann und daher eine Entladung vermieden werden sollte. Daher kann vorsorglich das Umschalten in den Bereitschaftszustand für einen gewissen Zeitraum ausgesetzt werden, bis die hierdurch entnommene elektrische Ladung auch wieder schneller aufgeladen und ein erforderlicher Ladezustand sichergestellt werden kann.

Vorzugsweise weist das Verfahren ferner die Schritte auf:
- Ermitteln der eingeschalteten Verbraucher des Fahrzeugs,
- Summieren der den als eingeschaltet ermittelten Verbrauchern zugeordneten Ströme,
- Vergleichen der summierten Ströme der als eingeschaltet ermittelten Verbraucher mit dem erzeugten Strom einer elektrischen Energiequelle des Fahrzeugs, und
- im Falle des Vorliegens eines höheren verbrauchten Stromes als erzeugten Stromes, Umschalten in den Normalbetriebszustand oder Erlassen eines Abschaltverbots für die Dauer des Vorliegens.

Über eine derartige Energiebilanz zwischen Verbrauch und Erzeugung elektrischer Energie kann ein Defizit ermittelt und hierauf mit einer Aussetzung des Bereitschaftszustands reagiert werden. Dabei wird der aktuelle Stromverbrauch nicht gemessen sondern dadurch ermittelt, dass die Ein- bzw. Ausschaltzustände der elektrischen Verbraucher ermittelt werden. Den elektrischen Verbrauchern sind jeweils Daten über ihren Stromverbrauch zugeordnet, z.B. in einem Speicher hinterlegt, so dass die hinterlegten Stromverbrauchsdaten der als eingeschaltet ermittelten elektrischen Verbraucher zu einem theoretischen Gesamtstromverbrauch aufaddiert werden können. Liegt dieser zum Zeitpunkt des Eintretens des Defizits bereits vor, weil im Bereitschaftszustand der elektrische Verbrauch z.B. durch die zusätzliche Inbetriebnahme wenigstens eines weiteren elektrischen Verbrauchers erhöht wurde, so wird wieder in den Normalbetriebszustand geschaltet, um den Generator des Fahrzeugs zu aktivieren und eine weitere Entladung des Fahrzeugbatterie zu vermeiden.

Vorzugsweise weist das Verfahren ferner die Schritte auf:
- Ermitteln der gesamten Betriebszeit des Fahrzeugs seit Fahrtbeginn,
- Ermitteln der Zeit im Bereitschaftszustand des Fahrzeugs seit Fahrtbeginn,
- Ermitteln des Verhältnisses zwischen der gesamten Zeit im Bereitschaftszustand und der gesamten Betriebszeit des Fahrzeugs, und
- bei Überschreiten eines ersten vorbestimmten Grenzwertes, vorzugsweise 0,5, Umschalten in den Normalbetriebszustand und bzw. oder Erlassen eines Abschaltverbots, bis das Verhältnis einen zweiten vorbestimmten Grenzwert, vorzugsweise 0,3, wieder überschreitet.

Unter dem Fahrtbeginn ist der Motorstart des Fahrzeugs in den Normalbetriebszustand nach seiner vollkommenen Abschaltung zu verstehen, z.B. das Betätigen der Zündung durch den Fahrer, nicht durch die Start-Stopp-Funktion. Werden diese beiden Zeiten ermittelt und ins Verhältnis zueinander gesetzt, so kann über einen vorbestimmten Grenzwert des Verhältnisses im Bereitschaftszustand wieder in den Normalbetriebszustand umgeschaltet und bzw. oder ein Umschaltverbot erlassen werden, um die Zeitspanne des Bereitschaftszustands gegenüber der gesamten Betriebszeit nicht weiter ansteigen zu lassen, da dies zu einer zu großen Entladung der Fahrzeugbatterie und damit Gefährdung des Wiederanlassens des Verbrennungsmotors führen könnte.

Vorzugsweise weist das Verfahren ferner die Schritte auf:
- Ermitteln des Vorliegens wenigstens einer Maßnahme zur Reduzierung eines elektrischen Energiedefizits, und
- im Ansprechen darauf, Erlassen eines Abschaltverbots für die Dauer der Maßnahme.

Auf diese Weise können die Maßnahmen zur Reduzierung des elektrischen Energiedefizits unterstützt werden, indem eine in diesem Fall ungewollte Abschaltung des energieerzeugenden Generators beim Umschalten in den Bereitschaftszustand vermieden wird.

Vorzugsweise wird im Bereitschaftszustand ein Teil der aktivierten elektrischen Verbraucher, vorzugsweise für Komfortfunktionen des Fahrers bzw. der Insassen vorgesehene Verbraucher, für die Dauer des Bereitschaftszustands deaktiviert. Als Komfortfunktionen können z.B. Annehmlichkeiten für die Insassen angesehen werden, insbesondere träge und verbrauchsintensive Verbraucher wie die Front- bzw. Heckscheibenheizung oder die Sitzheizung. Hierdurch ist es möglich, die Entladung der Fahrzeugbatterie während des Bereitschaftszustands zu reduzieren und hierdurch die Wiederstartfähigkeit zu verbessern.

Vorzugsweise weist das Verfahren ferner die Schritte auf:
- Ermitteln der Zeitdauer eines vorliegenden Bereitschaftszustands,
- Ermitteln des elektrischen Energieverbrauchs der aktivierten elektrischen Verbraucher für die ermittelte Zeitdauer, und
- falls der ermittelte elektrische Energieverbrauch einen vorbestimmten Wert überschreitet, Umschalten in den Normalbetriebszustand.

Auf diese Weise wird über den vorbestimmten Wert eines elektrischen Energieverbrauchs sichergestellt, dass ein Bereitschaftszustand nach Verbrauch dieser Energiemenge wieder automatisch beendet wird. Dabei dauert der ununterbrochene Bereitschaftszustand umso länger, desto geringer der elektrische Energiebedarf aller aktivierten elektrischen Verbraucher ist.

Vorzugsweise müssen ferner alle folgenden Bedingungen erfüllt sein, um in den Bereitschaftszustand umzuschalten:
- wenigstens ein vorbestimmter elektrischer Verbraucher des Fahrzeugs ist abgeschaltet, und
- eine Leerlaufdrehzahlanhebung ist nicht aktiviert, und
- ein Datenkommunikationsbus des Fahrzeugs ist betriebsbereit.

Ein vorbestimmter elektrischer Verbraucher ist vorzugsweise ein Verbraucher mit einem vergleichsweise hohen elektrischen Energiebedarf wie z.B. die Front- und bzw. oder Heckscheibenheizung, das Licht und bzw. oder elektrische PTC (positive temperature coefficient)- Luftzusatzheizung. Über eine aktivierte Leerlaufdrehzahlanhebung wird die Aufladung durch den Generator erhöht, was ebenfalls auf einen gesteigerten elektrischen Energiebedarf hindeutet, weshalb auch in diesem Fall ein Umschalten in den Bereitschaftszustand verhindert werden kann. Ferner erfordert die Start-Stopp-Funktion einen betriebsbereiten Datenkommunikationsbus; ist dieser nicht gegeben, sollte ebenfalls kein Umschalten erfolgen.

Vorzugsweise wird die Start-Stopp-Funktion deaktiviert, falls wenigstens eine der folgenden Bedingungen erfüllt ist:
- eine elektrische Verbindung des Bordnetzes zum elektrischen Energiespeicher ist unterbrochen und bzw. oder kann nicht überprüft werden, und bzw. oder
- die Kommunikation des Datenkommunikationsbusses zur Motorsteuerung ist unterbrochen und bzw. oder kann nicht überprüft werden, und bzw. oder
- eine elektrische Energiequelle des Fahrzeugs weist einen Fehler auf.

Alle diese Funktionseinschränkungen bedeuten eine nicht unwesentliche Fehlfunktion des Fahrzeugs, so dass aus Sicherheitsgründen auf die Start-Stopp-Funktion verzichtet werden sollte. Sie führen vorzugsweise zu einer Ausgabe einer entsprechenden Warnung an den Fahrer.

Gemäß einem weiteren Aspekt der vorliegenden Erfindung betrifft diese auch ein Fahrzeug mit Verbrennungsmotor mit einer Start-Stopp-Funktion, durch die das Fahrzeug zwischen einem Normalbetriebszustand mit laufendem Verbrennungsmotor und einem Bereitschaftszustand mit ausgeschaltetem Verbrennungsmotor automatisch umschaltbar ist, mit einer Steuerungseinrichtung, die eingerichtet ist, ein zuvor beschriebenes Verfahren auszuführen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung eines erfindungsgemäßen Fahrzeugs;
- Figur 2: ein Ablaufdiagramm mit verschiedenen erfindungsgemäßen Verfahren, die zur Unterdrückung des Umschaltens in den Bereitschaftszustand führen; und
- Figur 3: ein Ablaufdiagramm mit verschiedenen erfindungsgemäßen Verfahren, die zum Umschalten in den Normalbetriebszustand führen.

### Ausführungsbeispiele der Erfindung

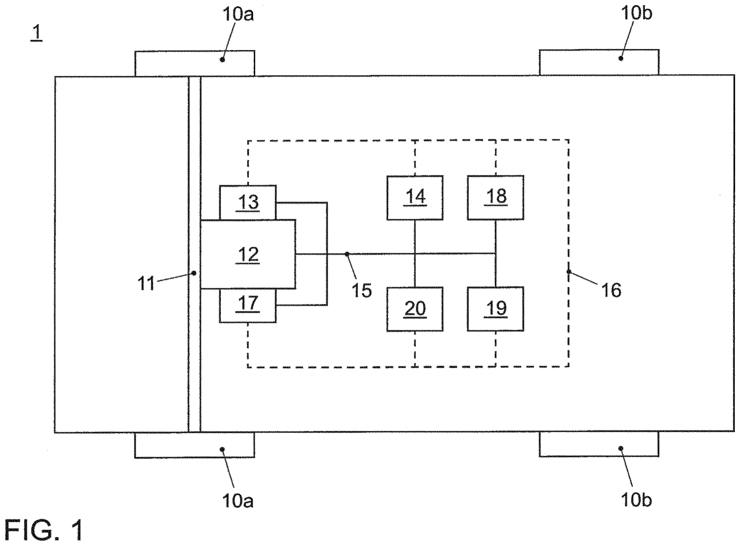

Figur 1 zeigt eine schematische Darstellung eines erfindungsgemäßen Fahrzeugs 1. Das Fahrzeug 1 weist Vorderräder 10a und Hinterräder 10b auf. Die Vorderräder 10a sind über eine Vorderachse 11 mittels eines Getriebes (nicht dargestellt) mit einem Verbrennungsmotor 12 verbunden, um die Antriebskraft des Verbrennungsmotors 12 auf den Untergrund des Fahrzeugs 1 zu übertragen. Der Verbrennungsmotor 12 treibt ferner eine elektrische Energiequelle in Form eines Generators 13 an, der seine elektrische Energie an ein (elektrisches) Bordnetz 15 des Fahrzeugs 1 abgeben kann. Der Motor 12 weist ferner ein Motorsteuergerät 17 auf. Die elektrische Energie des Generators 13 wird entweder durch Verbraucher 17-20 wie das Motorsteuergerät 17, eine (zentrale) Steuerungseinrichtung wie einen Bordcomputer 20, einen ersten elektrischen Verbraucher wie die Beleuchtungseinrichtung 18 und bzw. oder einen zweiten elektrischen Verbraucher wie eine Front- bzw. Heckscheibenheizung 19 des Fahrzeugs 1 konsumiert. Überschüssige elektrische Energie wird zur Aufladung eines elektrischen Energiespeichers in Form einer Fahrzeugbatterie 14 verwendet, die diese im Bedarfsfall wieder an die Verbraucher 17-20 abgeben kann. Alle elektrischen Verbraucher 17-20, Quellen 13 und Speicher 14 sind über das dem Bordnetz 15 elektrisch leitfähig miteinander verbunden. Alle diese Elemente 13, 14, 17-20 sind ferner über einen Datenkommunikationsbus 16 miteinander verbunden, um Informationen, Anforderungen, Anweisungen etc. auszutauschen.

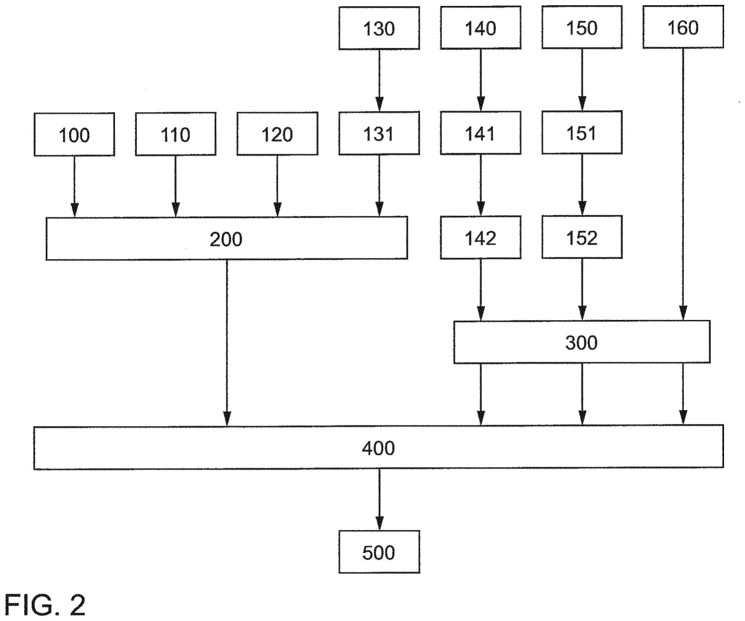

Figur 2 zeigt ein Ablaufdiagramm mit verschiedenen erfindungsgemäßen Verfahren, die zur Unterdrückung des Umschaltens in den Bereitschaftszustand führen. In einem Schritt 100 kann eine Ermittlung der Kühlmitteltemperatur des Fahrzeugs 1 erfolgen. Alternativ oder zusätzlich kann in einem Schritt 110 eine Ermittlung des Nutzungsstatus der Fahrzeugbatterie 14 erfolgen. Alternativ oder zusätzlich kann in einem Schritt 120 eine Ermittlung des Stromflusses im Bordnetz 15 und bzw. oder des Status wenigstens eines elektrischen Verbrauchers wie z.B. der Beleuchtungseinrichtung 18 und bzw. oder der Front- bzw. Heckscheibenheizung 19 erfolgen. Alternativ oder zusätzlich kann in einem Schritt 130 eine Ermittlung der Außentemperatur und bzw. oder der Temperatur der Fahrzeugbatterie 14 und in einem weiteren Schritt 131 eine Ermittlung einer Ladewilligkeit der Fahrzeugbatterie 14 erfolgen. Jedem dieser Schritte 100-131 nachfolgend erfolgt in einem Schritt 200 eine Berechnung einer Mindestbetriebsdauer des Verbrennungsmotors 12 in Abhängigkeit der jeweiligen ermittelten Parameter, bis zu der kein Umschalten in den Bereitschaftszustand ausgeführt werden darf.

Alternativ oder zusätzlich erfolgt in einem Schritt 140 eine Ermittlung der eingeschalteten Verbraucher 18, 19. In einem weiteren Schritt 141 erfolgt dann ein Summieren der vorgegebenen Ströme der als eingeschaltet ermittelten Verbraucher 18, 19. In einem weiteren Schritt 142 erfolgt dann ein Vergleichen der summierten Ströme der als eingeschaltet ermittelten Verbraucher 18, 19 mit dem erzeugten Strom des Generators 13. Alternativ oder zusätzlich erfolgt in einem Schritt 150 eine Ermittlung der gesamten Betriebszeit des Fahrzeugs 1 seit Fahrtbeginn und in einem Schritt 151 eine Ermittlung der Zeit im Bereitschaftszustand des Fahrzeugs 1 seit dem erstmaligen Betrieb. In einem weiteren Schritt 152 erfolgt eine Ermittlung des Verhältnisses zwischen der gesamten Zeit im Bereitschaftszustand und der gesamten Betriebszeit des Fahrzeugs 1. Alternativ oder zusätzlich erfolgt in einem Schritt 160 eine Ermittlung des Vorliegens von wenigstens einer Maßnahme zur Reduzierung eines elektrischen Energiedefizits. Jedem dieser Schritte 140-160 nachfolgend erfolgt in einem Schritt 300 ein Erlassen eines Abschaltverbots für die Dauer des Vorliegens der jeweiligen Bedingung.

Den Schritten 200 bzw. 300 nachfolgend erfolgt dann in einem Schritt 400 ein Überprüfen des Vorliegens wenigstens eines Abschaltverbots und im Falle des Vorliegens wenigstens eines Abschaltverbots in einem Schritt 500 ein Unterdrücken des Umschaltens in den Bereitschaftszustand. Hierbei kann zuerst geprüft werden, ob bereits wenigstens eine Abschaltbedingung vorliegt und diese dann durch das Abschaltverbot unterdrückt werden soll, oder es erfolgt bei Vorliegen eines Abschaltverbotes für dessen Dauer überhaupt keine Betrachtung möglicher Abschaltbedingungen, weil diese ohnehin nicht umgesetzt werden würden.

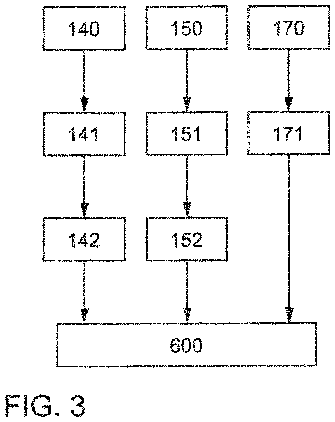

Figur 3 zeigt ein Ablaufdiagramm mit verschiedenen erfindungsgemäßen Verfahren, die zum Umschalten in den Normalbetriebszustand führen. Hierbei werden die Schritte 140-142 bzw. 150-152 auch im Bereitschaftszustand durchgeführt und das Ergebnis der Schritte 142 bzw. 152 kann dann in einem Schritt 600 zum Umschalten zurück in den Normalbetriebszustand führen. Alternativ oder zusätzlich kann im Bereitschaftszustand in einem Schritt 170 eine Ermittlung der Zeitdauer des aktuellen Bereitschaftszustands und in einem Schritt 171 eine Ermittlung des elektrischen Energiebedarfs der aktivierten elektrischen Verbraucher 18, 19 für die ermittelte Zeitdauer erfolgen. Überschreitet der ermittelte elektrische Energiebedarf einen vorbestimmten Wert, so erfolgt auch in diesem Fall in einem Schritt 600 ein Umschalten in den Normalbetriebszustand.

Auch wenn die erfindungsgemäßen Aspekte und vorteilhaften Ausführungsbeispiele anhand der in Verbindung mit den beigefügten Zeichnungen erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zum Betrieb eines Fahrzeugs (1) mit Verbrennungsmotor (12) mit einer Start-Stopp-Funktion, durch die das Fahrzeug (1) zwischen einem Normalbetriebszustand mit laufendem Verbrennungsmotor (12) und einem Bereitschaftszustand mit ausgeschaltetem Verbrennungsmotor (12) automatisch umschaltbar ist, mit den Schritten:
Überprüfen (400) des Vorliegens wenigstens eines Abschaltverbots, und
im Falle des Vorliegens wenigstens eines Abschaltverbots, Unterdrücken (500) des Umschaltens in den Bereitschaftszustand,
**dadurch gekennzeichnet, dass** das Abschaltverbot berücksichtigt:
den Verlauf des Nutzungsstatus eines elektrischen Energiespeichers (14) des Fahrzeugs (1) über eine vorbestimmte Zeitdauer, wobei ferner die Kühlmitteltemperatur des Verbrennungsmotors (12) berücksichtigt wird, wobei die Berücksichtigung der Kühlmitteltemperatur des Verbrennungsmotors (12) mittels der Schritte erfolgt:
Ermitteln (100) der Kühlmitteltemperatur, vorzugsweise im abgestellten Zustand des Fahrzeugs (1), und
Berechnen (200) einer Mindestbetriebsdauer des Verbrennungsmotors (12) in Abhängigkeit der ermittelten Kühlmitteltemperatur, bis zu deren Verstreichen kein Umschalten in den Bereitschaftszustand ausgeführt werden darf.

2. Verfahren nach Anspruch 1, wobei die Berücksichtigung des Nutzungsstatus des elektrischen Energiespeichers (14) mittels der Schritte erfolgt:
Ermitteln (110) des Nutzungsstatus des elektrischen Energiespeichers (14),
vorzugsweise im abgestellten Zustand des Fahrzeugs (1), und
Berechnen (200) einer Mindestbetriebsdauer des Verbrennungsmotors (12) in Abhängigkeit des ermittelten Nutzungsstatus, bis zu deren Verstreichen kein Umschalten in den Bereitschaftszustand ausgeführt werden darf.

3. Verfahren nach einem der vorherigen Ansprüche, wobei ferner folgender Parameter berücksichtigt wird:
eine Spannung im Bordnetz (15) des Fahrzeugs (12) und/oder eines elektrischen Energiespeichers (14), insbesondere in einem vorbestimmten Zustand des Fahrzeugs (12), vorzugsweise als Ruhespannung im Bordnetz (15) und/oder als Ruhespannung des elektrischen Energiespeichers (14) im abgestellten Zustand des Fahrzeugs (12).

4. Verfahren nach einem der vorherigen Ansprüche, ferner mit den Schritten:
Ermitteln (120) des Stromflusses im Bordnetz (15) und/oder des Status wenigstens eines elektrischen Verbrauchers (18, 19), vorzugsweise im abgestellten Zustand des Fahrzeugs (1), und
Berechnen (200) einer Mindestbetriebsdauer des Verbrennungsmotors (12), bis zu deren Verstreichen kein Umschalten in den Bereitschaftszustand ausgeführt werden darf, in Abhängigkeit des ermittelten Stromflusses und/oder Status wenigstens eines elektrischen Verbrauchers (18, 19).

5. Verfahren nach einem der vorherigen Ansprüche, ferner mit den Schritten:
Ermitteln (130) der Außentemperatur und/oder der Temperatur des elektrischen Energiespeichers (14) des Fahrzeugs (1), vorzugsweise im abgestellten Zustand des Fahrzeugs (1),
Ermitteln (131) einer Ladewilligkeit des elektrischen Energiespeichers (14), und
Berechnen (200) einer Mindestbetriebsdauer des Verbrennungsmotors (12) in Abhängigkeit der ermittelten Ladewilligkeit des elektrischen Energiespeichers (14), bis zu deren Verstreichen kein Umschalten in den Bereitschaftszustand ausgeführt werden darf.

6. Verfahren nach einem der vorherigen Ansprüche, ferner mit den Schritten:
Ermitteln (140) der eingeschalteten Verbraucher (18, 19) des Fahrzeugs (1),
Summieren (141) der den als eingeschaltet ermittelten Verbrauchern (18, 19) zugeordneten Ströme,
Vergleichen (142) der summierten Ströme der als eingeschaltet ermittelten Verbraucher (18, 19) mit dem erzeugten Strom einer elektrischen Energiequelle (13) des Fahrzeugs (1), und
im Falle des Vorliegens eines höheren verbrauchten Stromes als erzeugten Stromes, Umschalten (600) in den Normalbetriebszustand oder Erlassen (300) eines Abschaltverbots für die Dauer des Vorliegens.

7. Verfahren nach einem der vorherigen Ansprüche, ferner mit den Schritten:
Ermitteln (150) der gesamten Betriebszeit des Fahrzeugs (1) seit Fahrtbeginn,
Ermitteln (151) der Zeit im Bereitschaftszustand des Fahrzeugs (1) seit Fahrtbeginn,
Ermitteln (152) des Verhältnisses zwischen der gesamten Zeit im Bereitschaftszustand und der gesamten Betriebszeit des Fahrzeugs (1), und
bei Überschreiten eines ersten vorbestimmten Grenzwertes, vorzugsweise 0,5,
Umschalten in den Normalbetriebszustand (600) und/oder Erlassen (300) eines Abschaltverbots, bis das Verhältnis einen zweiten vorbestimmten Grenzwert,
vorzugsweise 0,3, wieder überschreitet.

8. Verfahren nach einem der vorherigen Ansprüche, ferner mit den Schritten:
Ermitteln (160) des Vorliegens wenigstens einer Maßnahme zur Reduzierung eines elektrischen Energiedefizits, und
im Ansprechen darauf, Erlassen (300) eines Abschaltverbots für die Dauer der Maßnahme.

9. Verfahren nach einem der vorherigen Ansprüche,
wobei im Bereitschaftszustand ein Teil der aktivierten elektrischen Verbraucher (18, 19), vorzugsweise für Komfortfunktionen des Fahrers bzw. der Insassen vorgesehene Verbraucher (18, 19), für die Dauer des Bereitschaftszustands deaktiviert wird.

10. Verfahren nach einem der vorherigen Ansprüche, ferner mit den Schritten:
Ermitteln (170) der Zeitdauer eines vorliegenden Bereitschaftszustands,
Ermitteln (171) des elektrischen Energieverbrauchs der aktivierten elektrischen Verbraucher (18, 19) für die ermittelte Zeitdauer, und
falls der ermittelte elektrische Energieverbrauch einen vorbestimmten Wert überschreitet, Umschalten (600) in den Normalbetriebszustand.

11. Verfahren nach einem der vorherigen Ansprüche,
wobei ferner alle folgenden Bedingungen erfüllt sein müssen, um in den Bereitschaftszustand umzuschalten:
wenigstens ein vorbestimmter elektrischer Verbraucher (18, 19) des Fahrzeugs (1) ist abgeschaltet, und
eine Leerlaufdrehzahlanhebung ist nicht aktiviert, und
ein Datenkommunikationsbus (16) des Fahrzeugs (1) ist betriebsbereit.

12. Verfahren nach einem der vorherigen Ansprüche,
wobei die Start-Stopp-Funktion deaktiviert wird, falls wenigstens eine der folgenden Bedingungen erfüllt ist:
eine elektrische Verbindung des Bordnetzes (15) zum elektrischen Energiespeicher (14) ist unterbrochen und/oder kann nicht überprüft werden, und/oder
die Kommunikation des Datenkommunikationsbusses (16) zur Motorsteuerung (17) ist unterbrochen und/oder kann nicht überprüft werden, und/oder
eine elektrische Energiequelle (13) des Fahrzeugs (1) weist einen Fehler auf.

13. Fahrzeug (1) mit Verbrennungsmotor (12) mit einer Start-Stopp-Funktion, durch die das Fahrzeug (1) zwischen einem Normalbetriebszustand mit laufendem Verbrennungsmotor (12) und einem Bereitschaftszustand mit ausgeschaltetem Verbrennungsmotor (12) automatisch umschaltbar ist, mit
einer Steuerungseinrichtung (20), die eingerichtet ist, ein Verfahren nach einem der vorherigen Ansprüche auszuführen.

## Claims

1. Method for operating a vehicle (1) having an internal combustion engine (12) with a start-stop function that can be used to automatically switch the vehicle (1) between a normal operating state with the internal combustion engine (12) running and a standby state with the internal combustion engine (12) switched off, having the steps of:
checking (400) whether at least one deactivation ban is present, and
preventing (500) the switch to the standby state if at least one deactivation ban is present,
**characterized in that** the deactivation ban takes into account:
the progression of the usage status of an electrical energy store (14) of the vehicle (1) over a predetermined period, wherein
the coolant temperature of the internal combustion engine (12) is also taken into account, wherein the coolant temperature of the internal combustion engine (12) is taken into account by means of the steps of:
determining (100) the coolant temperature, preferably when the vehicle (1) is switched off, and
calculating (200), on the basis of the determined coolant temperature, a minimum operating period of the internal combustion engine (12), until the expiry of which a switch to the standby state is not allowed to be carried out.

2. Method according to Claim 1, wherein the usage status of the electrical energy store (14) is taken into account by means of the steps of:
determining (110) the usage status of the electrical energy store (14), preferably when the vehicle (1) is switched off, and
calculating (200), on the basis of the determined usage status, a minimum operating period of the internal combustion engine (12), until the expiry of which a switch to the standby state is not allowed to be carried out.

3. Method according to one of the preceding claims, wherein the following parameter is also taken into account:
a voltage in the electrical system (15) of the vehicle (12) and/or of an electrical energy store (14), in particular in a predetermined state of the vehicle (12), preferably as an open-circuit voltage in the electrical system (15) and/or as an open-circuit voltage of the electrical energy store (14) when the vehicle (12) is switched off.

4. Method according to one of the preceding claims, also having the steps of:
determining (120) the current flow in the electrical system (15) and/or the status of at least one electrical load (18, 19), preferably when the vehicle (1) is switched off, and
calculating (200), on the basis of the determined current flow and/or status of at least one electrical load (18, 19), a minimum operating period of the internal combustion engine (12), until the expiry of which a switch to the standby state is not allowed to be carried out.

5. Method according to one of the preceding claims, also having the steps of:
determining (130) the outside temperature and/or the temperature of the electrical energy store (14) of the vehicle (1), preferably when the vehicle (1) is switched off,
determining (131) a willingness of the electrical energy store (14) to be charged, and
calculating (200), on the basis of the determined willingness of the electrical energy store (14) to be charged, a minimum operating period of the internal combustion engine (12), until the expiry of which a switch to the standby state is not allowed to be carried out.

6. Method according to one of the preceding claims, also having the steps of:
determining (140) the loads (18, 19) of the vehicle (1) which are switched on,
adding (141) the currents associated with the loads (18, 19) determined to be switched on,
comparing (142) the added currents of the loads (18, 19) determined to be switched on with the current generated by an electrical energy source (13) of the vehicle (1), and
if there is a higher consumed current than generated current, switching (600) to the normal operating mode or issuing (300) a deactivation ban for the period for which there is a higher consumed current.

7. Method according to one of the preceding claims, also having the steps of:
determining (150) the entire operating time of the vehicle (1) since the start of the journey,
determining (151) the time for which the vehicle (1) is in the standby state since the start of the journey,
determining (152) the ratio between the total time in the standby state and the total operating time of the vehicle (1), and
switching (600) to the normal operating state and/or issuing (300) a deactivation ban, if a first predetermined limit value, preferably 0.5, is exceeded, until the ratio exceeds a second predetermined limit value, preferably 0.3, again.

8. Method according to one of the preceding claims, also having the steps of:
determining (160) the presence of at least one measure for reducing an electrical energy deficit, and
in response to this, issuing (300) a deactivation ban for the duration of the measure.

9. Method according to one of the preceding claims,
wherein some of the activated electrical loads (18, 19), preferably loads (18, 19) provided for comfort functions of the driver or the occupants, are deactivated in the standby state for the duration of the standby state.

10. Method according to one of the preceding claims, also having the steps of:
determining (170) the duration of the present standby state,
determining (171) the electrical energy consumption of the activated electrical loads (18, 19) for the determined duration, and
switching (600) to the normal operating state if the determined electrical energy consumption exceeds a predetermined value.

11. Method according to one of the preceding claims,
wherein all of the following conditions must also be met in order to switch to the standby state:
at least one predetermined electrical load (18, 19) of the vehicle (1) is deactivated, and
an idling speed increase is not activated, and
a data communication bus (16) of the vehicle (1) is ready for operation.

12. Method according to one of the preceding claims,
wherein the start-stop function is deactivated if at least one of the following conditions is met:
an electrical connection between the electrical system (15) and the electrical energy store (14) is interrupted and/or cannot be checked, and/or
the communication between the data communication bus (16) and the engine controller (17) is interrupted and/or cannot be checked, and/or
an electrical energy source (13) of the vehicle (1) has a fault.

13. Vehicle (1) having an internal combustion engine (12) with a start-stop function that can be used to automatically switch the vehicle (1) between a normal operating state with the internal combustion engine (12) running and a standby state with the internal combustion engine (12) switched off, having
a control device (20) configured to carry out a method according to one of the preceding claims.

## Revendications

1. Procédé de fonctionnement d'un véhicule (1) équipé d'un moteur à combustion interne (12) ayant une fonction marche-arrêt qui permet de commuter automatiquement le véhicule (1) entre un état de fonctionnement normal dans lequel le moteur à combustion interne (12) est en marche et un état d'attente dans lequel le moteur à combustion interne (12) est arrêté, ledit procédé comprenant les étapes suivantes :
vérifier (400) la présence d'au moins une interdiction d'arrêt, et
en cas de présence d'au moins une interdiction d'arrêt, supprimer (500) la commutation dans l'état d'attente, **caractérisé en ce que** l'interdiction d'arrêt prend en compte :
l'évolution de l'état d'utilisation d'un accumulateur d'énergie électrique (14) du véhicule (1) sur une durée prédéterminée, la température d'agent de refroidissement du moteur à combustion interne (12) étant également prise en compte, la prise en compte de la température d'agent de refroidissement du moteur à combustion interne (12) étant effectuée à l'aide des étapes suivantes :
déterminer (100) la température d'agent de refroidissement, de préférence lorsque le véhicule (1) est arrêté, et
calculer (200) en fonction de la température d'agent de refroidissement déterminée une durée de fonctionnement minimale du moteur à combustion interne (12) au bout de laquelle aucune commutation dans l'état d'attente ne peut être effectuée.

2. Procédé selon la revendication 1, la prise en compte de l'état d'utilisation de l'accumulateur d'énergie électrique (14) étant effectuée à l'aide des étapes suivantes :
déterminer (110) l'état d'utilisation de l'accumulateur d'énergie électrique (14), de préférence lorsque le véhicule (1) est arrêté, et
calculer (200) en fonction de l'état d'utilisation déterminé une durée de fonctionnement minimale du moteur à combustion interne (12) au bout de laquelle aucune commutation dans l'état d'attente ne peut être effectuée.

3. Procédé selon l'une des revendications précédentes, les paramètres suivants étant également pris en compte :
une tension du réseau de bord (15) du véhicule (12) et/ou d'un accumulateur d'énergie électrique (14), en particulier dans un état prédéterminé du véhicule (12),
de préférence comme tension de repos du réseau de bord (15) et/ou comme tension de repos de l'accumulateur d'énergie électrique (14) lorsque le véhicule (12) est arrêté.

4. Procédé selon l'une des revendications précédentes, comprenant en outre les étapes suivantes :
déterminer (120) le flux de courant dans le réseau de bord (15) et/ou l'état d'au moins un consommateur électrique (18, 19), de préférence lorsque le véhicule (1) est arrêté, et
calculer (200) une durée minimale de fonctionnement du moteur à combustion interne (12) au bout de laquelle aucune commutation dans l'état d'attente ne peut être effectuée, en fonction du flux de courant déterminé et/ou de l'état d'au moins un consommateur électrique (18, 19) .

5. Procédé selon l'une des revendications précédentes, comprenant en outre les étapes suivantes :
déterminer (130) la température extérieure et/ou la température de l'accumulateur d'énergie électrique (14) du véhicule (1), de préférence lorsque le véhicule (1) est arrêté,
déterminer (131) une capacité de charge de l'accumulateur d'énergie électrique (14) et
calculer (200) en fonction de la capacité de charge déterminée de l'accumulateur d'énergie électrique (14) une durée de fonctionnement minimale du moteur à combustion interne (12) au bout de laquelle aucune commutation dans l'état d'attente ne peut être effectuée.

6. Procédé selon l'une des revendications précédentes, comprenant en outre les étapes suivantes :
déterminer (140) les consommateurs allumés (18, 19) du véhicule (1),
additionner (141) les courants associés aux consommateurs (18, 19) déterminés comme allumés,
comparer (142) les courants additionnés des consommateurs (18, 19) déterminés comme allumés au courant généré d'une source d'énergie électrique (13) du véhicule (1), et
en cas de présence d'un courant consommé supérieur au courant généré, commuter (600) dans l'état de fonctionnement normal ou décréter (300) une interdiction d'arrêt pour la durée de ladite présence.

7. Procédé selon l'une des revendications précédentes, comprenant en outre les étapes suivantes :
déterminer (150) la durée de fonctionnement totale du véhicule (1) depuis le début du trajet,
déterminer (151) la durée dans l'état d'attente du véhicule (1) depuis le début du trajet,
déterminer (152) le rapport entre la durée totale dans l'état d'attente et la durée de fonctionnement totale du véhicule (1), et
en cas de franchissement vers le haut d'une première valeur limite prédéterminée, de préférence 0,5, commuter dans l'état de fonctionnement normal (600) et/ou décréter (300) une interdiction d'arrêt jusqu'à ce que le rapport redevienne supérieur à une deuxième valeur limite prédéterminée, de préférence 0,3.

8. Procédé selon l'une des revendications précédentes, comprenant en outre les étapes suivantes :
déterminer (160) la présence d'au moins une mesure de réduction d'un déficit d'énergie électrique, et
en réponse, décréter (300) une interdiction d'arrêt pour la durée de la mesure.

9. Procédé selon l'une des revendications précédentes,
dans l'état d'attente, une partie des consommateurs électriques activés (18, 19), de préférence des consommateurs (18, 19) destinés aux fonctions de confort du conducteur ou des passagers, étant désactivés pendant la durée de l'état d'attente.

10. Procédé selon l'une des revendications précédentes, comprenant en outre les étapes suivantes :
déterminer (170) la durée d'un état d'attente présent,
déterminer (171) la consommation d'énergie électrique des consommateurs électriques activés (18, 19) pour la durée déterminée, et
si la consommation d'énergie électrique déterminée franchit vers le haut une valeur prédéterminée, commuter (600) dans l'état de fonctionnement normal.

11. Procédé selon l'une des revendications précédentes,
en outre toutes les conditions suivantes devant être remplies pour commuter dans l'état d'attente :
au moins un consommateur électrique prédéterminé (18, 19) du véhicule (1) est arrêté, et
une augmentation de vitesse de rotation à vide n'est pas activée, et
un bus de communication de données (16) du véhicule (1) est prêt à fonctionner.

12. Procédé selon l'une des revendications précédentes,
la fonction marche-arrêt étant désactivée si au moins une des conditions suivantes est remplie :
une liaison électrique du réseau de bord (15) à l'accumulateur d'énergie électrique (14) est interrompue et/ou ne peut pas être vérifiée, et/ou
la communication du bus de communication de données (16) avec la commande de moteur (17) est interrompue et/ou ne peut pas être vérifiée, et/ou
une source d'énergie électrique (13) du véhicule (1) présente un défaut.

13. Véhicule (1) équipé d'un moteur à combustion interne (12) ayant une fonction marche-arrêt qui permet de commuter automatiquement le véhicule (1) entre un état de fonctionnement normal dans lequel le moteur à combustion interne (12) est en marche et un état d'attente dans lequel le moteur à combustion interne (12) est arrêté, ledit véhicule comprenant un dispositif de commande (20) qui est conçu pour mettre en œuvre un procédé selon l'une des revendications précédentes.
